# EUROPÄISCHE PATENTSCHRIFT

(11) **EP 1 370 095 B1**
(45) Veröffentlichungstag und Bekanntmachung des Hinweises auf die Patenterteilung: **21.03.2007**
(21) Anmeldenummer: 03012904.3
(22) Anmeldetag: 06.06.2003
(51) Int. Cl.: H04Q 7/22

(54) **Verfahren zur Standort-Ermittlung in Mobilfunknetzen**
Method for determining a position in mobile radio networks
Procédé de détermination de position dans un réseau de téléphonie mobile

(30) Priorität: 07.06.2002 DE 10225388
(43) Veröffentlichungstag der Anmeldung: 10.12.2003
(73) Patentinhaber: 4D-Lab Mobile Solutions GmbH, 60569 Frankfurt (DE)
(72) Erfinder: Österle, Joachim, Dipl.-Ing. (FH), 72270 Baiersbronn-Klosterreichenbach (DE)
(74) Vertreter: Lieck, Hans-Peter

(56) Entgegenhaltungen:
- EP-A- 0 851 702
- EP-A- 1 139 688
- WO-A-01/91411
- WO-A2-98/37724

## Beschreibung

Die Erfindung betrifft ein Verfahren zum Ermitteln des momentanen geographischen Standortes eines Mobilfunk-Teilnehmers nach dem Oberbegriff des Anspruches 1.

Mobilfunknetze sind entsprechend den aufgestellten Sende- und Empfangsstationseinheiten in sog. Zellen aufgeteilt. Die Zentrale des Netzes muß die jeweiligen Standorte der angemeldeten, d.h. aktiven Teilnehmer innerhalb des Netzes kennen, zumindest zum Zwecke der Vermittlung der ankommenden Gespräche. Dazu ermittelt sie die jeweiligen Standorte der Teilnehmer periodisch oder fallweise auf Anforderung in Bezug auf die Topologie des Netzes. Im Regelfall stellt die Zentrale die Kennung der Netzzelle fest, mit deren Sende- und Empfangsstationseinheit der betrachtete Teilnehmer gerade verbunden ist. Diese topologische, d.h. netzspezifische Standort-Information wird in einem Standort-Register gespeichert. Für den normalen Netzbetrieb ist die topologische Standort-Information ausreichend.

In manchen Fällen jedoch, z.B. bei der Suche nach Vermißten oder dem Empfang von Notrufen, wünscht man den geographischen Standort des Teilnehmers zu kennen, d.h. seinen realen Standort auf der Erdoberfläche, ausgedrückt durch geographische Koordinaten in einem üblichen, geographischen Koordinatensystem. Solche üblichen geographischen Koordinatensysteme sind z.B. das Längengrad-Breitengrad-System, das Gauß-Krüger-System, das WGS84, das GPS-Netz, aber auch Postleitzahl-, Bezirke-, Gemeinde-Kennzahlen oder Orts- und Straßenangaben.

Für die physikalische Beschreibung ihres Netzes setzen die Betreiber eine netzeigene Geo-Datenbank ein, in welcher jede Netzkomponente bzw. Netzzelle einerseits mit den geographischen Koordinaten ihres Aufstellungsortes und andererseits mit den Daten in Bezug auf die Netz-Topologie verzeichnet ist. Durch Abfrage dieser Geo-Datenbank kann man eine bestimmte topologische Standort-Information in allgemeinverständliche geographische Koordinaten übersetzen. Dies wird in den zuvorgenannten Anwendungsfällen getan.

Immer häufiger werden aber auch solche Anwendungsfälle, in welchen der Mobilfunk-Teilnehmer selber direkt oder indirekt seinen jeweiligen geographischen Standort zu nutzen wünscht. Z.B fragt er bei einem sog. Inhalte-Anbieter telefonisch den Wetterbericht für das Gebiet ab, in welchem er sich gerade befindet. Oder er verlangt ein nahegelegenes Restaurant oder Hotel zu wissen. Um die standortbezogene Information richtig liefern zu können, muß der Inhalte-Anbieter den momentanen Standort des Mobilfunk-Teilnehmers kennen. Er wendet sich dazu an die Zentrale des Netzes, die daraufhin mit der gespeicherten topologischen Standort-Information ihre netzeigene Geo-Datenbank abfragt und die so erhaltenen geographischen Standort-Koordinaten dem Inhalte-Anbieter übermittelt.

Nun ist es im Zuge des sog. Roaming möglich, daß ein Mobilfunk-Teilnehmer nicht in seinem Heimatnetz aktiv ist, in welchem er registriert ist, sondern sich bei der Zentrale eines Gastnetzes angemeldet hat, dessen Betreiber diesen Dienst mit dem Betreiber des Heimatnetzes vertraglich vereinbart hat. Damit in diesem Falle die Gesprächsvermittlung möglich ist, übermittelt die Zentrale des Gastnetzes die gespeicherte topologische Standort-Information des betrachteten Teilnehmers auch an die Zentrale seines Heimatnetzes, wo sie im dortigen Standort-Register ebenfalls gespeichert wird. Kommt es in diesem Falle dazu, daß die geographischen Standort-Koordinaten des Teilnehmers gewünscht werden, kann die Geo-Datenbank des angefragten Heimatnetzes darüber keine Auskunft mehr geben. Bisher wird in diesen Fällen deshalb so verfahren, daß die Zentrale des Heimatnetzes mit der bei ihr verfügbaren topologischen Standort-Information eine Anfrage an die Zentrale des Gastnetzes richtet, diese dann in ihrer Geo-Datenbank die geographische Standort-Information ermittelt und an die Zentrale des Heimatnetzes zur weiteren Verwendung übergibt. Ein derartiges Verfahren ist aus der WO 01/91411 A1 (Nokia Networks Oy) seit 29.11.2001 bekannt.

Dieses übliche Verfahren ist technisch sehr aufwendig, weil von jedem Netzbetreiber der entsprechende Datenaustausch mit einer Vielzahl anderer Netzzentralen technisch implementiert werden muß. Da die verwendeten Kommunikations-Schnittstellen keineswegs einheitlich sind, muß jede Netzzentrale dabei auch in der Lage sein, eine Vielzahl unterschiedlicher proprietärer Schnittstellen zu unterstützen. Außerdem kommt es insbesondere bei kleineren Netzen vor, daß überhaupt keine netzeigene Geo-Datenbank vorhanden oder jedenfalls nicht für die spontane Übersetzung von topologischen in geographische Daten eingerichtet ist.

Der Erfindung liegt die Aufgabe zugrunde, ein Verfahren anzugeben, mit welchem die Ermittlung geographischer Standort-Information für in Gastnetzen angemeldete Mobilfunk-Teilnehmer vereinfacht wird.

Diese Aufgabe ist erfindungsgemäß durch das im Anspruch 1 und bezüglich vorteilhafter Ausgestaltungen in den Unteransprüchen gekennzeichnete Verfahren gelöst.

Bei dem erfindungsgemäßen Verfahren ist für mehrere Mobilfunknetze nur eine einzige, netzübergreifende Geo-Datenbank vorgesehen, welche von den Zentralen der beteiligten Netze zur Übersetzung von topologischen in geographische Daten gemeinsam benutzt wird. Bei dieser Lösung kommuniziert jede Netz-Zentrale nur mit der einen zentralen Geo-Datenbank, unabhängig davon, in welchem Netz sich der betrachtete Teilnehmer gerade befindet. Dadurch sind die Kommunikations-Strukturen, die jede Netz-Zentrale vorhalten muß, deutlich vereinfacht. Für die Übersetzung der Standort-Information ist nur noch eine einzige, immer gleiche Kommunikationsverbindung notwendig. Das beschleunigt außerdem den Datenverkehr im Falle einer Anfrage. Das erfindungsgemäße Verfahren ermöglicht die Zurverfügungstellung von geographischer Standort-Information auch dann, wenn das jeweilige Gastnetz die entsprechenden Informationen nicht selber bereithält. Da wegen der Zentralisierung vergleichsweise viele Anfragen abgewickelt werden, lassen sich statistische Methoden zur Erkennung und Korrektur fehlerhafter Daten anwenden, was die Qualität der gelieferten Information verbessert. Die in der zentralen Geo-Datenbank hinterlegten Berechtigungsregeln bestimmen, welche Netz-Zentralen welche Daten in welchem Format erhalten dürfen, und werden konsultiert, bevor die zentrale Geo-Datenbank die Anfrage beantwortet.

Vorzugsweise werden die Anfragen von den Netz-Zentralen an die gemeinsame, zentrale Geo-Datenbank und deren Antwort über gesicherte Verbindungen im Internet abgewickelt. Das Verfahren wird besonders effizient, wenn die zentrale Geo-Datenbank nur mit einer, für alle angeschlossenen Zentralen einheitlichen Schnittstelle arbeitet. Ebenso werden vorzugsweise für alle beteiligten Netze ein oder mehrere gleiche, netzübergreifende geographische Koordinatensysteme verwendet, in welchem die übersetzten geographischen Koordinaten angegeben sind.

Neben der Lieferung geographischer Standort-Information kann die zentrale Geo-Datenbank noch weitere, den Service verbessernde Funktionen übernehmen. Hierzu gehört insbesondere, die geographischen Daten in verschiedenen Formaten vorzuhalten, d.h. definiert in Bezug auf verschiedene geographische Koordinatensysteme. Die anfragende Netz-Zentrale hat es dann in der Hand, die Daten in dem einen oder anderen Format zu erhalten. Die entsprechende Festlegung wird entweder einmal für alle Anfragen getroffen oder, noch flexibler jeweils neu mit jeder Anfrage, wobei es dann auf die Ursache der Anfrage ankommen kann, in welchem Koordinatensystem die gewünschten Standort-Daten geliefert werden sollen. Hierzu können bevorzugt die hinterlegten Berechtigungsregeln hinzugezogen werden. Schließlich können in der zentralen Geo-Datenbank auch Verrechnungsregeln hinterlegt sein und Abrechnungsdatensätze generiert werden, aufgrund welcher die zentrale Geo-Datenbank automatisch für jede Netz-Zentrale die Kosten und Erlöse ermittelt, die dieser für die Anfragen und die Lieferung der Topologie-Daten zustehen.

Wenn im Zusammenhang dieser Beschreibung und der Ansprüche von der Zentrale eines Mobilfunknetzes die Rede ist, sollen damit solche Mobilfunknetze nicht ausgeschlossen sein, die mit mehreren örtlich verteilten Subzentralen arbeiten, die entweder virtuell zu einer gemeinsamen Zentrale zusammengeschlossen oder einer physischen gemeinsamen Zentrale zugeordnet sind. Bei einer Netzstruktur mit Subzentralen kann das erfindungsgemäße Verfahren so abgewickelt werden, daß jede Subzentrale ihre eigene Kommunikationsverbindung mit der zentralen Geo-Datenbank hat oder im Bedarfsfall aufbaut.

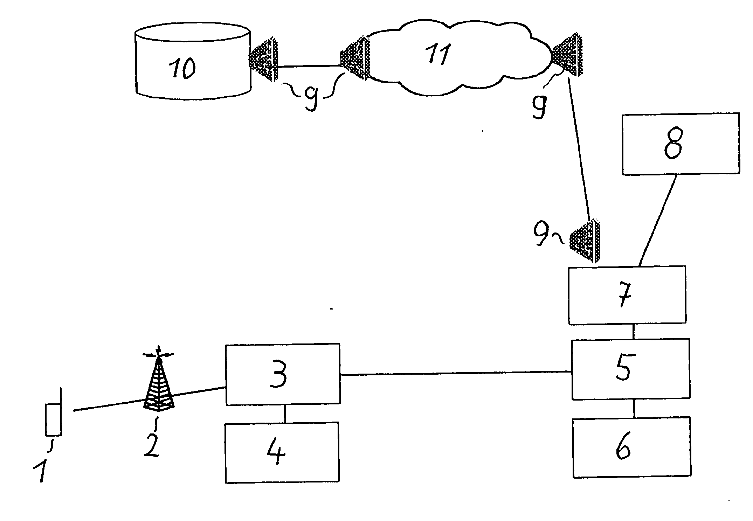

Im Folgenden ist die Erfindung mit weiteren vorteilhaften Einzelheiten an Hand eines schematisch dargestellten Ausführungsbeispiels näher erläutert. Die einzige Figur zeigt stark vereinfacht die Anordnung zweier Mobilfunknetze, zwischen denen das erfindungsgemäße Verfahren abgewickelt wird.

Ein Mobilfunk-Teilnehmer befindet sich mit seinem Endgerät 1 im Erfassungsbereich einer Sende- und Empfangsstation 2, die wie viele weitere, nicht dargestellte Stationen, mit der Zentrale 3 eines Mobilfunknetzes verbunden ist. Der Teilnehmer, genauer sein Endgerät 1 ist bei der Zentrale 3 in der üblichen Weise angemeldet. Die Zentrale 3 ermittelt periodisch oder fallweise den Standort des Endgerätes 1 in Bezug auf die Topologie des Netzes. Dazu stellt sie fest, in welcher Netzzelle der mehreren Sende- und Empfangsstationen des Netzes das Endgerät 1 eingebucht ist. Die von der betreffenden Sende- und Empfangsstation abgedeckte Zelle des Netzes hat eine Kennung, die zusammen mit der Kennung des Endgerätes 1 in einem Standort-Register 4 gespeichert wird.

Für den Teilnehmer ist das Netz der Zentrale 3 ein Gastnetz, bei dem er "zu Besuch" ist. Der Teilnehmer ist originärer Kunde bei einem anderen Mobilfunknetz, dem Heimatnetz, mit der Zentrale 5, bei der er als Kunde registriert ist. Die Zentrale 5 ist für die Vermittlung ankommender Gespräche an den Teilnehmer zuständig. Damit sie informiert ist, daß sich der Teilnehmer in einem Gastnetz befindet, übermittelt die Zentrale 3 des Gastnetzes die topologische Standort-Information aus dem Standort-Register 4 fortlaufend oder fallweise auch über die Zentrale 5 des Heimatnetzes an ein Standort-Register 6 des Heimatnetzes. In diesem wird die Standort-Information gehalten wie im Standort-Register 4.

Der Zentrale 5 ist ein Standort-Vermittler 7 zugeordnet. Es handelt sich um eine Einrichtung, welche Standort-Anfragen erhält, z.B. von einem externen Dienste-Anbieter 8, und diese nach Abwicklung einer Rückfrage-Prozedur beantwortet. Der Dienste-Anbieter wünscht den momentanen geographischen Standort des Teilnehmers mit dem Endgerät 1 zu wissen, ausgedrückt in einem üblichen geographischen Koordinatensystem, um z.B. eine vom Teilnehmer bei ihm gestellte Anfrage sachgerecht beantworten zu können. Selbstverständlich sind in Verbindung mit solchen Anfragen bestimmte Berechtigungs- und Datenschutz-Kriterien zu beachten, was mit bekannten, hier nicht näher dargestellten Routinen geschieht.

Die Anfrage vom Anbieter 8 gelangt über den Vermittler 7 zur Zentrale 5. Diese fragt aus dem Standort-Register 6 die aktuellen topologischen Standort-Daten des Teilnehmers ab. Dabei kann vorgesehen sein, die Standort-Daten im Zusammenwirken mit der Zentrale 3 und deren Standort-Register 4 zunächst zu aktualisieren. Die topologischen Standort-Daten werden an den Vermittler 7 übergeben. Der Vermittler 7 baut eine gesicherte Kommunikationsverbindung, im dargestellten Fall über das Internet 11, zu einer zentralen Geo-Datenbank 10 auf. In der Datenbank 10 sind für eine Vielzahl von teilnehmenden Mobilfunknetzen deren topologische Daten, vorzugsweise in Form der Zell-Kennungen, und in Korrelation damit die geographischen Koordinaten der Zellen, ausgedrückt in einem üblichen geographischen Koordinatensystem, z.B. dem Längengrad-Breitengrad-System, gespeichert.

Der Vermittler 7 führt über die gesicherte Kommunikationsverbindung eine Abfrage bei der zentralen Geo-Datenbank 10 durch, mit welcher die vorhandene topologische Standort-Information in eine geographische Standort-Information, nämlich die Koordinaten-Werte des benutzten geographischen Koordinatensystems übersetzt wird. Die geographische Standort-Information wird sodann vom Vermittler 7 an den Anbieter 8 übermittelt, welcher sie zur Formulierung seiner Antwort an den anfragenden Teilnehmer verwendet. Bei der Abfrage der zentralen Geo-Datenbank 10 spielt es keine Rolle, auf welches teilnehmende Gastnetz sich die topologischen Daten beziehen. Alle Abfragen werden in der gleichen Weise abgewickelt und benutzen die gleiche, einheitliche Schnittstelle in der zentralen Geo-Datenbank.

Aus Sicherheitsgründen verläuft die Kommunikationsverbindung zwischen dem Vermittler 7 und der zentralen Geo-Datenbank 10 über mehrere sog. Firewalls 9. Die einzige Figur zeigt die zentrale Geo-Datenbank 10 nur in Bezug auf das Netz mit der Zentrale 5. Tatsächlich ist die zentrale Geo-Datenbank 10 einer Vielzahl teilnehmender Mobilfunknetze zugeordnet, so auch in nicht dargestellter Weise dem Mobilfunknetz mit der Zentrale 3, die dazu jeweils ebenfalls einen Vermittler 7 betreiben, welcher über das Internet eine Kommunikationsverbindung zur zentralen Geo-Datenbank aufbauen kann.

## Patentansprüche

1. Verfahren zum Ermitteln des momentanen geographischen Standortes eines Mobilfunk-Teilnehmers, dessen Endgerät (1) bei der Zentrale (5) eines ersten Mobilfunknetzes im Folgenden Heimatnetz genannt registriert ist, und der sich mit seinem Endgerät (1) zeitweise im Einzugsbereich eines anderen Mobilfunknetzes im Folgenden Gastnetz genannt befindet und bei dessen Zentrale (3) als Teilnehmer angemeldet ist, bei welchem Verfahren die Zentrale (3) des Gastnetzes periodisch oder fallweise auf Anforderung den jeweiligen Standort des Teilnehmers in Bezug auf die Topologie des Gastnetzes ermittelt und die entsprechende topologische Standort-Information an die Zentrale (3) des Heimatnetzes überträgt, wo sie in einem Standort-Register (6) gespeichert wird, und bei welchem die Topologie-Daten des Gastnetzes in einer Geo-Datenbank mit geographischen Koordinaten korreliert sind und die der topologischen Standort-Information entsprechende geographische Standort-Information durch Abfrage der Geo-Datenbank erhalten wird,
**dadurch gekennzeichnet,**
**daß** mehrere Mobilfunknetze eine zentrale Geo-Datenbank (10) benutzen, in welcher die Topologie-Daten mindestens zweier teilnehmender Netze mit geographischen Koordinaten korreliert sind, und daß die jeweilige Netz-Zentrale (5) im Bedarfsfall mit der vorhandenen topologischen Standort-Information die zentrale Geo-Datenbank abfragt, welche daraufhin die topologische in eine geographische Standort-Information übersetzt und an die anfragende Netz-Zentrale (5) übermittelt,
und **daß** in der zentralen Geo-Datenbank (10) Berechtigungsregeln hinterlegt werden und die zentrale Geo-Datenbank (10) bei jeder Anfrage prüft, ob die anfragende Netz-Zentrale (5) zum Erhalt der gewünschten geographischen Standort-Information berechtigt ist.

2. Verfahren nach Anspruch 1,
bei welchem die Kommunikation zwischen den Netz-Zentralen (3; 5) und der zentralen Geo-Datenbank (10) über das Internet (11) abgewickelt wird.

3. Verfahren nach Anspruch 1 oder 2,
bei welchem die Kommunikation zwischen den Netz-Zentralen (3; 5) und der zentralen Geo-Datenbank (10) über eine gesicherte Verbindung abgewickelt wird.

4. Verfahren nach Anspruch 1, 2 oder 3,
bei welchem die Netz-Zentralen (3; 5) mit der zentralen Geo-Datenbank (10) über eine einheitliche Schnittstelle kommunizieren.

5. Verfahren nach Anspruch 1, 2, 3 oder 4,
bei welchem die in der zentralen Geo-Datenbank (10) gespeicherten geographischen Koordinaten der Netze in Bezug auf ein oder mehrere einheitliche, netzübergreifende geographische Koordinatensysteme definiert sind.

6. Verfahren nach Anspruch 5,
bei welchem jeweils die anfragende Netz-Zentrale (3; 5) das Koordinatensystem bestimmt, in welchem die gewünschte geographische Standort-Information definiert sein soll.

7. Verfahren nach Anspruch 6,
bei welchem das gewünschte Koordinatensystem zusammen mit der Anfrage bestimmt wird.

8. Verfahren nach einem der Ansprüche 1 bis 7,
bei welchem in der zentralen Geo-Datenbank (10) AbrechnungsDatensätze generiert und anhand hinterlegter Verrechnungsregeln ausgewertet werden.

9. Verfahren nach einem der Ansprüche 1 bis 8,
bei welchem als topologische Standort-Information die Kennung der Netzzelle verwendet wird, in welcher sich der Teilnehmer befindet.

10. Verfahren nach einem der Ansprüche 1 bis 9,
bei welchem standortbezogene Inhalte an den Mobilfunkteilnehmer geliefert werden.

## Claims

1. A method of determining the instantaneous geographic location of a mobile telephone subscriber whose mobile entity (1) is registered at the control center (5) of a first cellular network, hereinafter referred to as home network, and who, at times, finds himself with his mobile entity within the service area of another cellular network, hereinafter referred to as guest network, at the control center (3) of which he is booked as a caller, wherein the control center (3) of the guest network periodically or from case to case, upon request, determines the respective location of the caller with respect to the topology of the guest network, transmitting the respective location topology information to the control center (5) of the home network to be memorized there in a location register (6), and wherein the topology data of the guest network are correlated with geographic coordinates in a geo data base, and the location geography information corresponding to the location topology information is obtained by querying the geo data base,
**characterized in that** a plurality of cellular networks share a central geo data base (10) in which the topology data of at least two participating networks are correlated with geographic coordinates, and **in that**, in case of need, the respective network control center (5) queries the central geo data base with the given location topology information, whereupon the central geo data base translates the location topology information into location geography information which it transmits to the inquiring network control center (5), and **in that** authentication rules are deposited in the central geo data base (10) and, upon each inquiry, the central geo data base (10) checks whether the in inquiring network control center (5) is entitled to receive the location geography information desired.

2. The method as claimed in claim 1, wherein communication between the network control centers (3; 5) and the central geo data base (10) is handled through the internet (11).

3. The method as claimed in claim 1 or 2, wherein communication between the network control centers (3; 5) and the central geo data base (10) is handled through a secured connection.

4. The method as claimed in claim 1, 2 or 3, wherein the network control centers (3; 5) communicate with the central geo data base (10) through a uniform interface.

5. The method as claimed in claim 1, 2, 3 or 4, wherein the geographic coordinates of the networks memorized in the central geo data base (10) are defined with reference to one or more uniform, cross-network, geographic coordinate systems.

6. The method as claimed in claim 5, wherein the respective inquiring network control center (3; 5) determines the coordinate system in which the desired location geography information is to be defined.

7. The method as claimed in claim 6, wherein the desired coordinate system is determined together with the inquiry.

8. The method as claimed in any one of claims 1 to 7, wherein the central geo data base (10) generates accounting data sets and evaluates them on the basis of recorded invoicing rules.

9. The method as claimed in any one of claims 1 to 8, wherein the identification of the network cell within which the caller is located serves as the location topology information.

10. The method as claimed in any one of claims 1 to 9, wherein location-based contents are delivered to the mobile telephone subscriber.

## Revendications

1. Procédé de détermination d'une localisation géographique momentanée d'un abonné de téléphonie mobile, dont l'appareil terminal (1) est enregistré auprès de la centrale (5) d'un premier réseau de téléphonie mobile appelé ci-après réseau d'attache, et qui se trouve avec son appareil terminal (1) temporairement dans la zone de desserte d'un autre réseau de téléphonie mobile appelé ci-après réseau externe et auprès de la centrale (3) duquel il est inscrit à titre d'abonné, procédé dans lequel la centrale (3) du réseau externe détermine périodiquement ou au cas par cas sur demande, la localisation respective de l'abonné quant à la topologie du réseau externe et transmet l'information de position topologique correspondante à la centrale (5) du réseau d'attache où elle est mémorisée dans un registre de localisation (6), et dans lequel les données de topologie du réseau externe sont corrélées dans une base de données géographiques avec coordonnées géographiques et l'information de localisation géographique correspondant à l'information de localisation topologique est obtenue par questionnement de la base de données géographiques,
**caractérisé en ce que**
plusieurs réseaux de téléphonie mobile utilisent une base de données géographiques (10) centrale dans laquelle les données topologiques d'au moins deux réseaux abonnés sont corrélées avec des coordonnées géographiques,
et **en ce qu'**en cas de besoin, la centrale de réseau (5) respective interroge avec l'information de localisation topologique existante la banque de données géographiques centrale qui traduit alors l'information de localisation topologique en une information de localisation géographique et transmet celle-ci à la centrale de réseau (5) interrogatrice,
et **en ce que** des règles d'autorisation sont déposées dans la base de données géographiques centrale (10), et la base de données géographiques centrale (10) vérifie à chaque interrogation si la centrale de réseau (5) interrogatrice est autorisée à recevoir l'information de localisation géographique souhaitée.

2. Procédé selon la revendication 1, dans lequel la communication entre les centrales de réseaux (3 ; 5) et la base de données géographiques centrale (10) est réalisée via l'Internet (11).

3. Procédé selon la revendication 1 ou 2, dans lequel la communication entre les centrales de réseaux (3 ; 5) et la base de données géographiques centrale (10) est réalisée via une liaison sécurisée.

4. Procédé selon la revendication 1, 2 ou 3, dans lequel les centrales de réseaux (3 ; 5) communiquent avec la base de données géographiques centrale (10) via une interface unitaire.

5. Procédé selon l'une des revendications 1, 2, 3 ou 4, dans lequel les coordonnées géographiques des réseaux, mémorisées dans la base de données géographiques centrale (10), sont définies par rapport à un ou à plusieurs systèmes de coordonnées géographiques unitaires pour tous les réseaux.

6. Procédé selon la revendication 5, dans lequel la centrale de réseau interrogatrice (3 ; 5) respective détermine le système de coordonnées dans lequel l'information de localisation géographique souhaitée doit être définie.

7. Procédé selon la revendication 6, dans lequel le système de coordonnées souhaité est déterminé conjointement avec l'interrogation.

8. Procédé selon l'une des revendications 1 7, dans lequel dans la base de données centrale (10) sont générés des enregistrements comptables qui sont évalués à l'aide de règles d'acquittement mémorisées.

9. Procédé selon l'une des revendications 1 à 8, dans lequel on utilise à titre d'information de localisation topologique l'identificateur de la cellule de réseau dans laquelle se trouve l'abonné.

10. Procédé selon l'une des revendications 1 à 9, dans lequel des contenus concernant la localisation sont fournis à l'abonné de téléphonie mobile.
